# EUROPEAN PATENT SPECIFICATION

(11) **EP 3 001 006 B1**
(45) Date of publication and mention of the grant of the patent: **21.05.2025**
(21) Application number: 15187081.3
(22) Date of filing: 28.09.2015
(51) Int. Cl.: F01P 3/20, F02B 29/04

(54) **A COOLING SYSTEM FOR AN INTERNAL COMBUSTION PISTON ENGINE, A METHOD OF OPERATING AN INTERNAL COMBUSTION PISTON ENGINE AND AN INTERNAL COMBUSTION PISTON ENGINE**
KÜHLSYSTEM FÜR EINEN KOLBENVERBRENNUNGSMOTOR, VERFAHREN ZUM BETRIEB EINES KOLBENVERBRENNUNGSMOTORS UND KOLBENVERBRENNUNGSMOTOR
SYSTÈME DE REFROIDISSEMENT POUR UN MOTEUR À COMBUSTION INTERNE À PISTONS, PROCÉDÉ DE FONCTIONNEMENT D'UN MOTEUR À COMBUSTION INTERNE À PISTONS ET MOTEUR À COMBUSTION INTERNE À PISTONS

(30) Priority: 29.09.2014 FI 20145849
(43) Date of publication of application: 30.03.2016
(73) Proprietor: Wärtsilä Finland Oy, 65100 Vaasa (FI)
(72) Inventor: CALCINOTTO, Paolo, 34018 San Dorligo della Valle Trieste (IT); PERINEL, Luciano, 34018 San Dorlingo della Valle Trieste (IT); LOLLIS, Davide, 34018 San Dorlingo della Valle Trieste (IT)
(74) Representative: Genip Oy

(56) References cited:
- WO-A1-2008/080872
- WO-A1-2009/078847
- WO-A1-99/53178
- GB-A- 2 057 564
- US-A- 4 325 219

## Description

### Technical field

The present invention relates to a cooling system for an internal combustion piston engine according to the preamble of claim 1. More specifically, the present invention relates to a cooling system for an internal combustion piston engine comprising a circuit for cooling fluid, a pump arranged in the circuit so as to maintain the fluid to flow in the circuit, an engine cooling system arranged to cool the engine or parts thereof and heat the fluid in the circuit, and a combustion air cooling system arranged to cool a combustion air and heat the fluid in the circuit by the heat transferred from the combustion air.

The present invention relates also to a method of operating an internal combustion piston engine according to method claim 8. Furthermore, the present invention relates to an internal combustion piston engine.

### Background art

Internal combustion engines need to operate at various operational loads efficiently and reliably. The requirements for the engine efficiencies remain high regardless of load. Particularly, the temperature prevailing in the engine and the cooling water system is desirable to be maintained at a certain level so as to provide a stable combustion.

WO 2011073512 A1 discloses a method of operating a piston engine comprising a low-temperature cooling circuit, a high-temperature cooling circuit and a charge air cooler connected to the low-temperature cooling circuit.

WO 2013045057 A1 discloses a cooling system for two-stage charged engines providing flexible cooling of intake air under a range of environmental conditions. The cooling system comprises a high-temperature cooling circuit and a low-temperature cooling circuit.

WO 2009078847 A1 discloses a system for regulating charge air temperature in an intake manifold of an internal combustion piston engine by controlling the flow rate and temperature of liquid engine coolant flowing through a liquid flow path of a charge air cooler. The charge air cooler is in heat exchange relationship with charge air entering the intake manifold over a range that provides for the charge air to be selectively heated and cooled by liquid engine coolant. The charge air temperature is regulated by using several components such as different types of radiators and coolers and wherein the fluid is flowing in different conduits.

WO2008080872 A1 discloses a water cooling system (1) for a combustion engine which comprises a high temperature cooling circuit for cooling the engine and a low temperature cooling circuit for cooling a water cooled charge air cooler for charge air to the engine. The cooling circuits are interconnected upstream and downstream a coolant pump of the high temperature cooling circuit, and the low temperature cooling circuit having a pump of its own. Further the low temperature cooling circuit has a low temperature heat exchanger bypass which is controlled by a multi-port valve. The valve enables at least two different operational modes, a heat up mode, in which hot coolant from the high temperature cooling circuit is used to heat the charge air in extremely cold ambient conditions, and a cooling mode, in which charge air is cooled in a traditional way.

WO9953178 A1 discloses a fluid circuit arrangement for an internal combustion engine comprising two circuits. The first circuit has an auxiliary heater, and a heat exchange means for cooling the engine. The second circuit has a heat exchange means for compressed combustion air, an auxiliary cooler and a valve device which is arranged to bring the auxiliary cooler into second circuit in response to the temperature in the first circuit and optionally to other operating parameters.

US 4325219A discloses two-loop engine cooling system that cools the intake air during running conditions and warms the air during low power conditions. The system includes a single coolant pump and two cooling loops, one loop passing through the engine block and head and a first radiator and the other loop passing through the aftercooler and a second radiator. Each loop further includes a by-pass branch around the radiator, and a flow control thermostat.

GB 2057564 A discloses a turbocharged engine system having two charge air heat exchangers for cooling the charge air. The cooling system supplies liquid coolant which has been cooled in the radiator to the first charge air heat exchanger. Coolant warmed in the first charge air heat exchanger is returned directly to the engine radiator 36. Thus, the first charge air heat exchanger is in parallel with the engine. The liquid coolant supplied to the second stage charge air heat exchanger flows in an independent circulation loop including a cooling heat exchanger and a circulation pump.

Generally, the engine temperature is maintained at a level of about 80°C by a cooling system in which cooling fluid is arranged flow to transfer excess heat out of the engine. It is particularly difficult to achieve an adequately high temperature at low combustion loads, particularly if the heat cooling of the cooling fluid is utilized in other applications required high temperature levels. Therefore, different heat recovery strategies have been developed. Presently, unfortunately, high temperatures from the high-temperature cooling circuit are mainly obtained at high loads. There is still a problem of achieving efficiently adequately high temperature for the fluid, particularly at low engine loads, after the charge air cooler.

An object of the invention is to provide cooling system for an internal combustion piston engine in which the performance is considerably improved compared to the prior art solutions.

### Disclosure of the Invention

The objects of the invention can be met substantially as is disclosed in the independent claims and in the other claims describing more details of different embodiments of the invention.

A cooling system for an internal combustion piston engine comprises a circuit for cooling water based solution, a pump arranged in the circuit so as to maintain the cooling water based solution flowing in the circuit, an engine cooling system arranged to cool the engine or parts thereof and heat the cooling water based solution in the circuit, and a combustion air cooling system arranged to cool combustion air and heat the cooling water based solution in the circuit by the heat transferred from the combustion air, and a cooler arranged to the circuit. The engine cooling system, the combustion air cooling system and the cooler are coupled in series in the circuit and the engine cooling system is arranged in an inlet side of the combustion air cooling system and, and the fluid flow control system is provided with a passage arranged to branch from the circuit in an outlet side of the combustion air cooling system and is extending between the outlet side and the inlet side of the combustion air cooling system such that a portion of the cooling water based solution flowed through the combustion air cooling system is arranged to flow to the passage of the fluid flow control system, which passage is arranged to lead the portion of the cooling water based solution to flow back into the combustion air cooling system so as to heat further at least the portion of the cooling water based solution by the heat transferred from the combustion air. A fluid flow control system is arranged to the circuit for controlling cooling water based solution flow in response to temperature of the cooling water based solution flowing from the combustion air cooling system, so obtaining a predetermined temperature for the cooling water based solution flowing in the circuit after the combustion air cooling system, and that the passage is provided with a pump to recirculate the cooling water based solution in the passage in a direction from the outlet side of the combustion air cooling system to the inlet side of the combustion air cooling system.

This provides a cooling system for an internal combustion piston engine which performance is considerably improved. The cooling system maintains the temperature of the fluid flowing from the combustion air cooling system and via the fluid flow control system in the circuit to be equal or greater than the predetermined temperature at any engine load level. Therefore, even at very low load level, the predetermined temperature level is achieved. Thus more and more heat can be recovered from the cooling system compared to prior art solutions. Furthermore, the cooling system is very compact and can be retrofitted. In a one loop of circulation one portion of the fluid is heated once by the combustion air cooling system whereas a second portion of the fluid is heated again by the combustion cooling system. Therefore, it can be said that the portion of the fluid is further heated in the cooling system. Due to the fact that the portion of the fluid is directed to the inlet side of the combustion air cooling system, the portion of the fluid is reheated by recycling back to receive heat from the combustion air. Thus, the fluid does not need to travel long distances to be heated further which reduces thermal losses. The term "a passage arranged to branch from the circuit in an outlet side of the combustion air cooling system" means that the passage branches from the circuit almost immediately after the combustion air cooling system in the inlet side in practical circumstances. Advantageously the passage branches from the circuit directly after the outlet of the combustion air cooling system.

When the engine cooling system is arranged in an inlet side of the combustion air cooling system it is upstream in the circuit in respect to the flow direction of the fluid. Respectively the outlet side is downstream in the flow direction from the engine cooling system.

According to the invention, the passage is extending between the outlet side and the inlet side of the combustion air cooling system and the passage is provided with a pump to recirculate the fluid in the passage in a direction from the outlet side of the combustion air cooling system to the inlet side of the combustion air cooling system. This will enhance the fluid to flow from the circuit into the passage while the fluid flow control system has open flow communication from the circuit into the passage.

According to an embodiment of the invention, the combustion air cooling system comprises two units the primary unit and the secondary unit which can also be integrated as a one combustion air cooling system. The combustion air cooling system comprises a primary unit arranged in series and successively with the engine cooling system and a secondary unit connected with the primary unit by the passage in series and that fluid flow control system comprises a by-pass passage for controllably by-pass the combustion air cooling secondary unit. One portion of the fluid may be guided into the passage while another portion continues its flow further in the circuit. The portion of the fluid flows into the secondary unit so as to heat the portion of the fluid. The portion of the fluid flows via the secondary unit back to the circuit where the portion of the fluid coming from the secondary unit and the other portion of the fluid coming directly from the primary unit are mixed and the portions are mixed so as to obtaining the predetermined temperature for the fluid.

According to an embodiment of the invention, the fluid flow control system comprises a valve element arranged to guide the fluid flow to the passage in response of the temperature of the fluid flowing from the combustion air cooling system. The valve element can be a thermostatic valve element or alike. The Thermostatic valve element is arranged to regulate the temperature of the fluid flowing out from the engine.

According to an embodiment of the invention, the valve element is a three-way valve element arranged to regulate the fluid to flow into the passage and control the fluid to flow after the combustion air cooling system. Thus the three-way valve element regulates the fluid flow out from the engine after the combustion air cooling system. Preferably, the three-way valve element is arranged successively in series with the combustion air cooling system being arranged right after the combustion air cooling system in practical circumstances so as to regulate at least the portion of the fluid, coming from the combustion air cooling system, to flow into the passage.

According to the invention, the circuit is provided with at least one temperature sensor for measuring a temperature of the fluid flowing in the circuit.

According to the invention, the temperature sensor is arranged into the circuit after the fluid flow control system so measuring temperature of fluid flowing from the combustion air cooling system.

According to an embodiment of the invention, after the fluid flow control system in a direction of flow, temperature of the fluid is greater than or equal to 95°C. In other words, the fluid flowing from the combustion air cooling system has a temperature that is equal or greater to 95°C. It should be noted that temperature level 95°C can also be obtained at low engine loads (less than 85% load).

According to an embodiment of the invention, the fluid flowing in the circuit is water based solution.

A method of operating a cooling system of an internal combustion piston engine comprising a circuit for cooling water based solution, a pump arranged in the circuit so as to maintain the cooling water based solution flowing in the circuit, an engine cooling system arranged to cool the engine or parts thereof and heat the cooling water based solution in the circuit, and a combustion air cooling system arranged to cool combustion air and heat the cooling water based solution in the circuit by the heat transferred from the combustion air, and a cooler arranged to the circuit, wherein the engine cooling system, the combustion air cooling system and the cooler are coupled in series in the circuit, the method comprising steps of maintaining a cooling water based solution flow by a pump in a circuit, cooling the engine or parts thereof and heating the cooling water based solution in the circuit with an engine cooling system, and cooling combustion air and heating the cooling water based solution in the circuit by in a combustion air cooling system, and measuring temperature of the cooling water based solution flowing from the combustion air cooling system, such that a portion of the cooling water based solution flowed through the combustion air cooling system is controlled to flow to a passage of fluid flow control system, which passage branches from the circuit in an inlet side of the combustion air cooling system extending between the outlet side and the inlet side of the combustion air cooling system and leads the portion of the water based solution to flow back into the combustion air cooling system and to heat further at least the portion of the cooling water based solution by the heat transferred from the combustion air, and further, operating a fluid flow control system arranged in the cooling system so that cooling water based solution flowed from the combustion air cooling system is controlled by a fluid flow control system in response to the measured cooling water based solution temperature after the combustion air cooling system, obtaining a predetermined temperature for the water based solution flowing in the circuit after the combustion air cooling system, and the cooling water based solution in the passage is pumped in a direction from the outlet side of the combustion air cooling system to the inlet side of the combustion air cooling system.

According to an embodiment of the invention, a fluid flow control system is operated so that
1) When the measured temperature of the fluid flowing from the combustion air cooling system is lower than a predetermined target temperature, the fluid flow control system guides a portion of the fluid to flow from the circuit via a passage back into the combustion air cooling system and heating further at least the guided portion of the fluid by the heat transferred from the combustion air and obtaining the predetermined target temperature for the fluid flowing after the combustion air cooling system in the circuit, and
2) When a temperature of the fluid flowing from the combustion air cooling system is equal or higher than the predetermined target temperature, the fluid flow control system regulates a portion of the fluid to so that the portion of the fluid guided via the passage into the combustion air cooling system is less than in the step 1).

According to an embodiment of the invention, the method comprises step of operating a fluid flow control system so that a portion of the fluid flow from the combustion air cooling system is recirculated back to the combustion air cooling system by a fluid flow control system in response to the measured temperature so as to heat further at least the portion of the fluid by the heat transferred from the combustion air and obtaining a predetermined temperature for the fluid flowing in the circuit after the combustion air cooling system.

According to an embodiment of the invention, the method comprises step of operating a fluid flow control system so that a portion of fluid flow from a primary unit of the combustion air cooling system is guided to a secondary unit of the combustion air cooling system by a fluid flow control system and a remaining portion of the fluid flow from a primary unit is guided to by-pass the secondary unit in response to the measured temperature so as to heat further at least the portion of the fluid by the heat transferred from the combustion air and obtaining a predetermined temperature for the fluid flowing in the circuit after the combustion air cooling system.

According to an embodiment of the invention, the method comprises the step of maintaining the fluid at a temperature of at least 95°C. This can be done by maintaining with the fluid flow control system the fluid temperature to be at the predetermined temperature that is at least 95°C.

An internal combustion piston engine may be improved by comprising a cooling system as described earlier. The internal combustion piston engine can be a supercharged engine. The internal combustion piston engine can be an engine used in ships.

### Brief Description of Drawings

In the following, the invention will be described with reference to the accompanying exemplary, schematic drawings, in which
Figure 1 illustrates a cooling system of an internal combustion piston engine according to the first embodiment of the invention,
Figure 2 illustrates a cooling system of an internal combustion piston engine, and
Figure 3 illustrates a cooling system of an internal combustion piston engine according to another embodiment of the invention.

### Detailed Description of Drawings

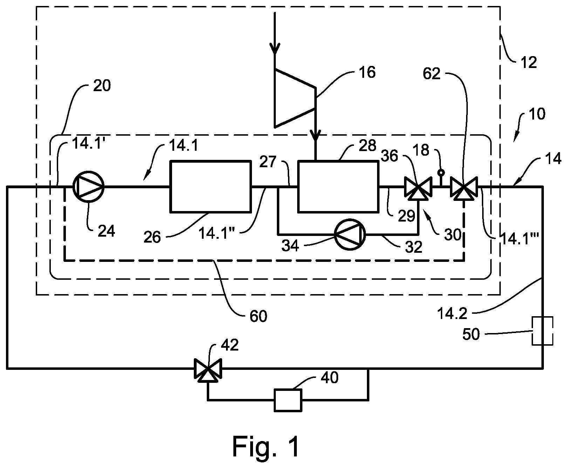

Figure 1 depicts schematically a cooling system 10 of an internal combustion piston engine 12. The cooling system 10 comprises a circuit 14 wherein cooling fluid is arranged to flow and simultaneously receive heat from the engine thus being at different temperatures at different parts of the circuit 14. The cooling fluid flowing in the circuit 14 is preferably water based solution. The circuit 14 is provided with a pump 24 arranged to maintain the fluid flowing in the circuit 14 wherein the pump 24 provides the fluid flow towards an engine cooling system 26 that is arranged to cool the engine 12 or parts thereof and heat the fluid in the circuit 14. Advantageously, the engine cooling system 26 is arranged to cool the cylinder heads and cylinder walls of the engine providing an adequate operation temperature in the engine 12. The engine cooling system comprises the engine cooling system 26 and a combustion air cooling system 28 successively coupled in series in the circuit 14. Therefore the fluid flows in the circuit 14 from the cylinder heads and cylinder walls of the engine into the combustion air cooling system 28. The combustion air cooling system 28 cools a combustion air pressurized by a compressor 16, which pressurizing also increases the temperature of the air. In the combustion air cooling system 28 heat is transferred from the combustion air to the fluid flowing in the circuit 14.

The cooling system 10 comprises further a fluid flow control system 30 arranged into the circuit 14 in such a manner that the fluid can be guided to flow from the combustion air cooling system 28 into the fluid flow control system 30. The fluid control system 30 comprises in this embodiment a valve element that is a three-way valve element 36 that can be a thermostatic valve element or alike. The three-way valve element 36 operates in response to temperature of the fluid flowing from the combustion air cooling system 28. Depending on the temperature of the fluid flowing from the combustion air cooling system 28 in the circuit, the three-way valve element 36 can regulate (0-100%) a flow communication from the circuit 14 into a passage 32 of the fluid flow control system 30. When the three-way valve element 36 opens the flow communication from the circuit 14 into the passage 32, a portion of the fluid is flowing from the combustion air cooling system 28 via the passage 32 back into the combustion air cooling system 28. In other words, the portion of fluid flowed through the combustion air cooling system 28 is arranged to flow via the passage 32 back into the combustion air cooling system 28. Thus the temperature of the fluid can be increased to the predetermined temperature before the fluid leaves from the engine 12. As can be seen in Figure 1, the passage 32 branches from the circuit 14 almost immediately after the combustion air cooling system 28 in the outlet side 29 in practical circumstances. Broadly speaking, the passage 32 branches from the circuit 14 in an inlet side of the pump 24.

According to an embodiment of the invention, the three-way valve 36 is arranged in a vicinity of and successively in series with the combustion air cooling system 28. Thus, the portion of fluid is guided almost immediately after the combustion air cooling system 28 with the three-way valve 36 to the passage 32, which passage 32 is arranged to lead the portion of the fluid from an inlet side of the combustion air cooling system 28 back into the combustion air cooling system 28. The term "almost immediately after" should be understood as in practical circumstances meaning preferably that there are no other devices between the combustion air cooling system 28, the three-way valve 36 and an entry of the passage 32 so to affecting the flow path. Due to the fact that an entry portion of the passage 32 and the three-way valve are arranged at a vicinity of the combustion air cooler 28, only the fluid coming substantially directly from the combustion air cooler 28 is subjected to be controlled by the three-way valve 32. In other words, the portion of the fluid flowing from the combustion air cooling system 28 is arranged to flow directly back via the passage 32 into the combustion air cooling system 28, in practical circumstances. A second portion of the fluid can flow further in the circuit 14 which is also controlled by the three-way valve element 36. Thus the three-way valve element 36 of the fluid flow control system 30 controls amount of fluid to flow into the passage 32 and in the circuit 14 after the combustion air cooling system 28. In a one loop of circulation one portion of the fluid is heated once by the combustion air cooling system 28 whereas another portion of the fluid is heated further by the combustion air cooling system 28 before leaving from the engine 12. Therefore, it can be said that the portion of the fluid is heated further in the cooling system 28.

The passage 32 is provided with a pump 34 so as to provide the portion of the fluid to flow from the circuit 14 into the passage 32. The passage 32 is arranged to branch from the circuit 14 in an outlet side 29 of the combustion air cooling system 28. This means that an inlet of the fluid flow control system 30 is arranged in the circuit 14 and being in the outlet side 29 of the combustion air cooling system 28. In Fig. 1, the passage 32 is extending between the outlet side 29 and an inlet side 27 of the combustion air cooling system 28. Specifically, the pump 34 is arranged to the passage 32 to guide the fluid to flow in the direction from the outlet side 29 of the combustion air cooling system 28 to the inlet side 27 of the combustion air cooling system 28. The passage 32 can be called as an additional branch of the circuit 14. It can be said that the circuit 14 is a main flow path and the passage 32 is a secondary flow path.

According to the invention, the circuit 14 can be provided with a temperature detector or sensor alike 18 so as to measure temperature of the cooling fluid flowing from the combustion air cooling system 28 in the circuit 14. The cooling system 10 is operated so that when a temperature of fluid flowing from the combustion air cooling system 28 is lower than a predetermined target temperature, the portion of the fluid is guided via the passage 32 into the combustion air cooling system 28 so as to increase the temperature of the fluid in the circuit 14. While the portion of the fluid is guided into the passage 32, the second portion of the fluid flows further in the circuit 14. In this embodiment, the portion of the fluid flowing via the passage 32 into the circuit 14 mixes with the second portion of the fluid that already is flowing in the circuit 14. It should be noted that the temperature of the portion of the fluid flowing via the passage 32 has a greater temperature than the fluid being in the circuit 14 flowing towards the combustion air cooling system 28 due to the fact that the portion of the fluid may already have been heated once in the combustion air cooler 28. This way the temperature of the fluid flowing in the circuit 14 after the combustion air cooling system 28 can be advantageously increased efficiently. The combustion air cooling system 28 heats the portion of the fluid by the heat transferred from the combustion air so obtaining a predetermined temperature for the fluid flowing in the circuit after the combustion air cooling system 28. In other words, the portion of the fluid flow from the combustion air cooling system 28 is recirculated back to the combustion air cooling system 28 by the fluid flow control system 30 in response to the measured temperature.

When the measured temperature of the fluid flowing from the combustion air cooling system 28 in the circuit 14 is equal or higher than the predetermined target temperature, the fluid flow control system 30, particularly the three-way valve element 36, regulates a portion to flow into the passage 32 so that the portion of the fluid guided into the passage 32 is less than in the case when the measured temperature of fluid is less than the predetermined temperature. In some circumstances, depending on the temperature of the fluid, the three-way valve element 36 can prevent any portion of the fluid to flow into the passage 32. In this case the fluid flows only in the circuit 14 without flowing additionally through the passage 32.

Specifically, Figure 1 illustrates schematically a so-called high-temperature cooling system 20 wherein the pump 24, the engine cooling system 26, the combustion air cooling system 28 and the fluid flow control system 30 are arranged. As illustrated in Figure 1, the pump 24, the engine cooling system 26 and the combustion air cooling system 28 are arranged in series in the circuit 14. The pump 24 is arranged in an inlet side of the engine cooling system 26. The engine cooling system 26 is arranged in an inlet side of the combustion air cooling system 28. Furthermore, according to an embodiment of the invention, the circuit 14 is a so-called high-temperature circuit of the cooling system of the engine. Namely, the cooling system of the engine can be divided into two separate circuits wherein a first circuit is a high-temperature circuit and a second circuit is a low-temperature circuit. Temperatures prevailing in the cylinder liner and the cylinder head are maintained at desired, higher temperature level by the high-temperature circuit whereas the low-temperature circuit is arranged to regulate the temperatures of one stage of charge air cooler and the lube oil cooler. More specifically, the high-temperature water circulates through cylinder jackets, cylinder heads and a high temperature stage charge air cooler. The low-temperature water circulates through low temperature stage charge air cooler and the lubricating oil cooler which is arranged on the engine. The coupling of high temperature and low temperature circuit may vary and are not described here in more detailed manner.

The temperature control in the high-temperature circuit is based on the water temperature after the engine whereas the charge air temperature is maintained on a set level with the low-temperature circuit. Temperature control valves regulate the temperature of the water out from the engine by circulating some water back to the pump inlet.

In Figure 1, the circuit 14 is divided schematically to a first channel portion 14.1 that refers to a path flowing via or at vicinity of the engine cooling system 26 and the engine 12, and a second channel portion 14.2 arranged outside the engine 12. According to an embodiment of the invention, the first channel portion 14.1 can be called as an engine high temperature path meaning that the channel portion 14.1 is arranged to the engine in practical circumstances and the second channel portion 14.2 can be called as an off-engine high temperature path meaning that the second channel portion 14.2 is arranged off, or outside, the engine. As shown in Figure 1, the engine cooling system 26 and the combustion air cooling system 28 are coupled in series in the first portion 14.1 of the circuit 14. The engine cooling system 26 is arranged in the inlet side 27 of the combustion air cooling system 28. The first channel portion 14.1 comprises three sub-portions: an inlet portion 14.1', an intermediate portion 14.1" between the engine cooling system 26 and the combustion air cooling system 28, and an outlet portion 14.1‴ after the combustion air cooling system 28. The fluid flowing into the inlet portion 14.1' has lower temperature than the fluid flowing in the intermediate portion 14.1". The fluid flows from the engine cooling system 26 via the intermediate portion 14.1" into the combustion air cooler 28 wherein the fluid temperature is increased. Thus the fluid temperature in the outlet portion 14.1‴ is greater than the fluid temperature in the intermediate portion 14.1". Advantageously, the first channel portion 14.1 is provided with the pump 24, the engine cooling system 26 and the combustion air cooling system 28. The pump 24, the engine cooling system 26 and the combustion air cooling system 28 are arranged successively in series in the first channel portion 14.1.

From the outlet portion 14.1‴, the fluid flows into the second channel portion 14.2 of the circuit 14. The temperature of the fluid in the second channel portion 14.2 of the circuit 14 is desired to be at the predetermined temperature level. However, the second channel portion 14.2 of the circuit 14 is provided with a cooler 40 so as to cool the temperature of the fluid due to the fact that the temperature of fluid fed into the first channel portion 14.1 of the circuit need to be lower for cooling purposes. Preferably, the temperature of fluid flowing out from the pump 24 is about 75°C. Furthermore, the second channel portion 14.2 can be arranged with a second valve element 42 and a by-pass duct so as to control the fluid flow to the cooler 40 in the second channel portion 14.2 of the circuit 14. Therefore, the cooling system provides the fluid to flow in the circuit 14 at an adequate temperature levels. According to an embodiment of the invention, the combustion air cooling system 28 is arranged to heat the fluid in the circuit 14 merely by the heat transferred from the combustion air.

The cooling system 10 may be provided with an additional conduit 60 that comprises a three-way valve element 62 that can be, for example, a thermostatic valve element similarly as the three-way valve element 36 of the fluid flow control system 30. The conduit 62 has an inlet in the circuit 14 wherein the fluid flows after the combustion air cooling system 28 and an outlet in the circuit 14 wherein the fluid flows towards the pump 24. The conduit 60 extends between the outlet side 29 of the combustion air cooling system 28 and an inlet side of the pump 24. In other words, the inlet of the conduit 60 is in the outlet portion 14.1‴ of the first channel portion 14.1 of the circuit 14 and the outlet of the conduit 60 is in the inlet portion 14.1' of the first channel portion 14.1 of the circuit 14. The three-way valve element 62 of the conduit 60 may be operated in response of the temperature prevailing in the circuit 14 after the valve element 62 in the flow direction of the fluid. Specifically, the three-way valve 62 of the conduit 60 may be operated in response of the temperature prevailing in the intermediate portion 14.1" of the first channel portion 14.1 between the engine cooling system 26 and the combustion air cooling system 28. However, it should be noted that the conduit 60 and the three-way valve element 62 of the conduit 60 may not be necessary to arrange into the cooling system 10 due to the fact that the fluid flow control system 30 is arranged into the circuit 14 to increase the temperature of the fluid flowing from the combustion air cooling system 28. Therefore, the conduit 60 is shown as a dashed line.

A heat recovery arrangement 50 can be arranged between the combustion air cooling system 28 and the cooler 40, to recover heat from the conduit 14 wherein the fluid flows in the predetermined target temperature at the probe 18. According to an embodiment, the predetermined target temperature is at least 95°C. In other words, the fluid coming out from the engine via the channel 14.2 has the temperature of at least 95°C, in all operational conditions that is all loads, before it is cooled in the cooler 40.

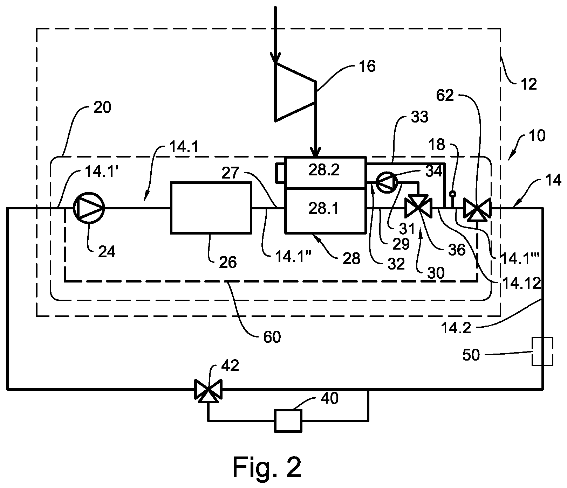

Figure 2 illustrates a cooling system 10 of an internal combustion piston engine 12, where the combustion air cooling system 28 comprises two units: a primary unit 28.1 arranged in series and successively with the engine cooling system 26 and a secondary unit 28.2 connected with the primary unit 28.1 by the passage 32 in series. The fluid flow control system 30 comprises also a by-pass passage 14.12 of the combustion air cooling secondary unit 28.2 so as allow a portion of the fluid to by by-pass the secondary unit 28.2 for controlling the heating of the fluid. The portion of the fluid guided via the passage to the secondary unit 28.2 is guided further into the circuit 14 to mix with a fluid portion coming directly from the primary unit 28.1 of the combustion air cooling system 28.

A portion of fluid flowing from the primary unit 28.1 of the combustion air cooling system 28 is guided to the secondary unit 28.2 of the combustion air cooling system 28 by the fluid flow control system 30 and a remaining portion of the fluid flow from a primary unit 28.1 is guided to by-pass the secondary unit 28.2 in response to the measured temperature. In other words, the fluid flows first in the circuit 14 from the engine cooling system 26 into the primary unit 28.1 and secondly the portion of the fluid flows through an inlet passage 31 of the passage 32 into the secondary unit 28.2 so as to further heat the portion of the fluid and the remaining portion of the fluid flow from the primary unit 28.1 is guided to by-pass the secondary unit 28.2 in response to the measured temperature. From the secondary unit 28.2 the portion of the fluid is guided via an outlet passage 33 of the passage 32 into the circuit 14, more particularly into the outlet portion 14.1‴ of the first channel portion 14.1, wherein the portion of the fluid mixes with the second portion of the fluid flowing directly from the primary unit 28.1 of the combustion air cooling system 28.

The inlet passage 31 of the passage 32 leads from the valve element 36 into the secondary unit 28.2 of the combustion air cooling system 28 and the outlet passage 33 of the passage 32 leads from the secondary unit 28.2 of the combustion air cooling system 28 into the conduit 14, specifically to the outlet portion 14.1‴ of the first channel portion 14.1. In a one loop of circulation one portion of the fluid is heated once by the combustion air cooling system 28, namely the primary unit 28.1, whereas another portion of the fluid is heated again by the combustion cooling system 28, namely the secondary unit 28.2. Therefore, it can be said that the portion of the fluid is further heated in the cooling system 28. While the portion of the fluid is guided into the passage 32, a second portion of the fluid flows through the by-pass passage 14.12 into the outlet portion 14.1‴ of the first channel portion 14.1.

Similarly, as in Figure 1, the passage 32 is provided with the pump 34 so as to provide the portion of the fluid to flow from the circuit 14 via the passage 32 into the secondary unit 28.2 of the combustion air cooling system 28. To be more specific, the inlet passage of the passage 32 is arranged to open from the three-way valve element 36 to the secondary unit 28.2 and the outlet passage 33 of the passage 32 is arranged to open into the outlet portion 14.1‴ of the first channel portion 14.1 of the circuit 14. When the portion of the fluid flows from the combustion air cooling system 28 into the circuit 14, it releases heat to the fluid that is in the circuit 14 so obtaining the predetermined target temperature before leaving from the engine 12. However, the three-way valve element 36 can prevent any portion of the fluid to flow into the passage 32. In this case the fluid flows only through the by-pass passage 14.12 in the circuit 14 without flowing additionally through the passage 32.

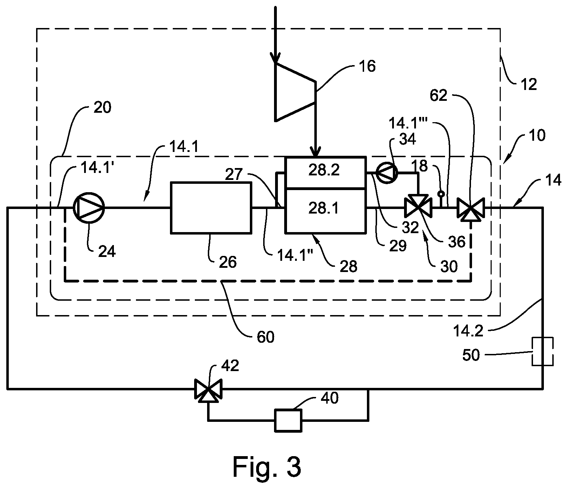

Figure 3 illustrates another embodiment of the invention wherein the combustion air cooling system 28 comprises two units: the primary unit 28.1 into which the fluid flows from the engine cooling system 26 and the secondary unit 28.2 into which the passage 32 guides the portion of the fluid to flow so as to heat the portion of the fluid and from the secondary unit 28.1 the portion of the fluid is guided into the intermediate portion 14.1" of the first channel portion 14.1 of the circuit 14. In other words, the inlet of the passage 32 is arranged into the three-way valve element 36 and an outlet of the passage 32 is arranged into the intermediate portion 14.1" of the first channel portion 14.1 of the circuit 14. The outlet of the passage 32 is arranged between the engine cooling system 26 and the combustion air cooling system 28 in the circuit 14.

In the case the measured fluid temperature, which is measured by the temperature sensor 18, is lower than the predetermined target temperature, for example 95°C, then a portion of the fluid is guided into the passage 32 that guides the portion of the fluid to flow into the secondary unit 28.2 of the combustion air cooling system 28. In the secondary unit 28.2 of the combustion air cooling system 28 the heat is transferred from the combustion air to the portion of the fluid. Then the portion of the fluid is guided into the outlet of the passage 32 arranged in the circuit between the engine cooling system 26 and the combustion air cooling system 28 so increasing the temperature of the fluid in the circuit, in the intermediate portion 14.1" of the first channel portion 14.1 of the circuit 14. Then the fluid flows from the intermediate portion 14.1" into the primary unit 28.1 of the combustion air cooling system 28 so obtaining the predetermined fluid temperature for the fluid flowing in the circuit 14 after the combustion air cooling system in the second channel portion 14.2 of the circuit 14. When the portion of the fluid flows from the combustion air cooling system 28 further in the circuit 14, heat transfers to the fluid that is in the circuit 14 so obtaining the predetermined target temperature that flows out from the engine into the second channel portion 14.2.

In Figure 3, the passage 32 is extending between an outlet side 29 and an inlet side 27 of the combustion air cooling system 28 and the secondary unit is arranged between the ends of the passage 32.

According to an embodiment of the invention, and as illustrated in Figures 1 and 3, the circuit 14 is a high-temperature circuit of the cooling system of the engine. Advantageously, the cooling system of the engine is divided into two separated circuits: a high-temperature circuit and a low-temperature circuit. Thus the cooling system of the engine advantageously comprises a high-temperature circuit and a low-temperature circuit. However, the separated low-temperature circuit is not shown in Figures 1-3. The temperature levels in the high-temperature circuit are mainly higher than in the low-temperature circuit.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. A cooling system (10) of an internal combustion piston engine (12) comprising a circuit (14) for cooling water based solution, a pump (24) arranged in the circuit (14) so as to maintain the cooling water based solution flowing in the circuit (14), an engine cooling system (26) arranged to cool the engine or parts thereof and heat the cooling water based solution in the circuit (14), and a combustion air cooling system (28) arranged to cool combustion air and heat the cooling water based solution in the circuit (14) by the heat transferred from the combustion air, and a cooler (40) arranged to the circuit (14), wherein the engine cooling system (26), the combustion air cooling system (28) and the cooler (40) are coupled in series in the circuit (14) and the engine cooling system (26) is arranged in an inlet side (27) of the combustion air cooling system (28) and, and the fluid flow control system (30) is provided with a passage (32) arranged to branch from the circuit (14) in an outlet side (29) of the combustion air cooling system (28) and is extending between the outlet side (29) and the inlet side (27) of the combustion air cooling system (28) and by-passing the cooler (40), such that a portion of the cooling water based solution flowed through the combustion air cooling system (28) is arranged to flow to the passage (32) of the fluid flow control system (30), which passage (32) is arranged to lead the portion of the cooling water based solution to flow back into the combustion air cooling system (28) so as to heat further at least the portion of the cooling water based solution by the heat transferred from the combustion air, **characterized in that** a fluid flow control system (30) is arranged to the circuit (14) for controlling cooling water based solution flow in response to temperature of the cooling water based solution flowing from the combustion air cooling system (28), so obtaining a predetermined temperature for the cooling water based solution flowing in the circuit (14) after the combustion air cooling system (28), and that the passage (32) is provided with a pump (24) to recirculate the cooling water based solution in the passage in a direction from the outlet side (29) of the combustion air cooling system (28) to the inlet side (27) of the combustion air cooling system (28).

2. A cooling system for an internal combustion piston engine according to claims 1, **characterized in that** the combustion air cooling system (28) comprises a primary unit (28.1) arranged in series and successively with the engine cooling system (26) and a secondary unit (28.2) connected with the primary unit (28.1) by the passage (32) in series and that fluid flow control system (30) comprises a by-pass passage (14.12) for controllably by-pass the combustion air cooling secondary unit (28.2).

3. A cooling system for an internal combustion piston engine according to anyone of claims 1-2, **characterized in that** the fluid flow control system (30) comprises a valve element (36) arranged to guide the cooling water based solution flow to the passage (32) in response of the temperature (18) of the cooling water based solution flowing from the combustion air cooling system (28).

4. A cooling system for an internal combustion piston engine according to claim 3, **characterized in that** the valve element (36) is a three-way valve element arranged to regulate the cooling water based solution to flow into the passage (32) and control the cooling water based solution to flow after the combustion air cooling system (28).

5. A cooling system for an internal combustion piston engine according to anyone of claims 1-4, **characterized in that** the circuit (14) is provided with at least one temperature sensor (18) for measuring a temperature of the cooling water based solution flowing in the circuit (14).

6. A cooling system for an internal combustion piston engine according to claim 5, **characterized in that** the temperature sensor (18) is arranged into the circuit (14) after the cooling water based solution flow control system (30) so measuring temperature of cooling water based solution flowing from the combustion air cooling system (28).

7. A method of operating a cooling system (10) of an internal combustion piston engine comprising a circuit (14) for cooling water based solution, a pump (24) arranged in the circuit (14) so as to maintain the cooling water based solution flowing in the circuit (14), an engine cooling system (26) arranged to cool the engine or parts thereof and heat the cooling water based solution in the circuit (14), and a combustion air cooling system (28) arranged to cool combustion air and heat the cooling water based solution in the circuit (14) by the heat transferred from the combustion air, and a cooler (40) arranged to the circuit (14), wherein the engine cooling system (26), the combustion air cooling system (28) and the cooler (40) are coupled in series in the circuit (14), the method comprising steps of maintaining a cooling water based solution flow by a pump (24) in a circuit (14), cooling the engine or parts thereof and heating the cooling water based solution in the circuit (14) with an engine cooling system (26), and cooling combustion air and heating the cooling water based solution in the circuit (14) by in a combustion air cooling system (28), and measuring temperature of the cooling water based solution flowing from the combustion air cooling system (28), such that a portion of the cooling water based solution flowed through the combustion air cooling system (28) is controlled to flow to a passage (32) of fluid flow control system (30), which passage (32) branches from the circuit (14) in an inlet side of the combustion air cooling system (28) extending between the outlet side (29) and the inlet side (27) of the combustion air cooling system (28)and by-passing the cooler (40),and leads the portion of the water based solution to flow back into the combustion air cooling system (28) and to heat further at least the portion of the cooling water based solution by the heat transferred from the combustion air, **characterized by** operating a fluid flow control system (30) arranged in the cooling system (10) so that cooling water based solution flowed from the combustion air cooling system (28) is controlled by a fluid flow control system (30) in response to the measured cooling water based solution temperature after the combustion air cooling system (28), obtaining a predetermined temperature for the water based solution flowing in the circuit (14) after the combustion air cooling system (28), and the cooling water based solution in the passage (32) is pumped (36) in a direction from the outlet side (29) of the combustion air cooling system (28) to the inlet side (27) of the combustion air cooling system (28).

8. A method of operating a cooling system (10) of an internal combustion piston engine according to claim 7, **characterized by** steps of:
1) When the measured temperature of the cooling water based solution flowing from the combustion air cooling system (28) is lower than a predetermined target temperature, the fluid flow control system (30) guides a portion of the cooling water based solution to flow from the circuit (14) via a passage (32) back into the combustion air cooling system (28) and heating further the guided portion of the cooling water based solution by the heat transferred from the combustion air and obtaining the predetermined target temperature for the cooling water based solution flowing after the combustion air cooling system (28) in the circuit (14), and
2) When a temperature of the cooling water based solution flowing from the combustion air cooling system (28) is equal or higher than the predetermined target temperature, the fluid flow control system (30) regulates a portion of the cooling water based solution to flow so that the portion of the cooling water based solution guided via the passage (32) into the combustion air cooling system (28) is less than in the step 1).

9. A method according to anyone of claims 7-8, **characterized by** operating a fluid flow control system (30) so that a portion of the cooling water based solution flow from the combustion air cooling system (28) is recirculated back to the combustion air cooling system by a fluid flow control system (30) in response to the measured temperature, heating further at least the portion of the cooling water based solution by the heat transferred from the combustion air and obtaining a predetermined temperature for the cooling water based solution flowing in the circuit (14) after the combustion air cooling system (28).

10. A method according to anyone of claims 7-8, **characterized by** operating a fluid flow control system (30) so that a portion of cooling water based solution flow from a primary unit (28.1) of the combustion air cooling system (28) is guided to a secondary unit (28.2) of the combustion air cooling system (28) by a fluid flow control system (30) and a remaining portion of the cooling water based solution flow from a primary unit (28.1) is guided to by-pass the secondary unit (28.2) in response to the measured temperature so as to heat further at least the portion of the cooling water based solution by the heat transferred from the combustion air and obtaining a predetermined temperature for the cooling water based solution flowing in the circuit (14) after the combustion air cooling system (28).

11. A method according to anyone of claims 7-10, **characterized by** maintaining the cooling water based solution at a temperature of at least 95°C.

12. An internal combustion piston engine comprising a cooling system (10) according to anyone of the preceding claims 1-6.

## Patentansprüche

1. Kühlsystem (10) eines Kolbenverbrennungsmotors (12), umfassend einen Kreislauf (14) für eine auf Kühlwasser basierende Lösung, eine Pumpe (24), die in dem Kreislauf (14) angeordnet ist, um die auf Kühlwasser basierende Lösung, in dem Kreislauf (14) strömt, zu halten, ein Motorkühlsystem (26), das angeordnet ist, um den Motor oder Teile davon zu kühlen und die auf Kühlwasser basierende Lösung in dem Kreislauf (14) zu erwärmen, und ein Verbrennungsluftkühlsystem (28), das angeordnet ist, um Verbrennungsluft zu kühlen und die auf Kühlwasser basierende Lösung in dem Kreislauf (14) durch die Wärme zu erwärmen, die von der Verbrennungsluft übertragen wird, und einen Kühler (40), der an dem Kreislauf (14) angeordnet ist, wobei das Motorkühlsystem (26), das Verbrennungsluftkühlsystem (28) und der Kühler (40) in Reihe in dem Kreislauf (14) gekoppelt sind und das Motorkühlsystem (26) in einer Einlassseite (27) des Verbrennungsluftkühlsystems (28) angeordnet ist und und das Fluidstrom-Steuersystem (30) mit einem Durchgang (32) versehen ist, der so angeordnet ist, dass er sich von dem Kreislauf (14) in einer Auslassseite (29) des Verbrennungsluftkühlsystems (28) abzweigt, und sich zwischen der Auslassseite (29) und der Einlassseite (27) des Verbrennungsluftkühlsystems (28) erstreckt und den Kühler (40) umgeht, so dass ein Teil der auf Kühlwasser basierenden Lösung, die durch das Verbrennungsluftkühlsystem (28) strömt, so angeordnet ist, dass er zu dem Durchgang (32) des Fluidstrom-Steuersystems (30) strömt, wobei der Durchgang (32) so angeordnet ist, dass der Teil der auf Kühlwasser basierenden Lösung zurück in das Verbrennungsluftkühlsystem (28) strömt, um mindestens den Teil der auf Kühlwasser basierenden Lösung durch die Wärme, die von der Verbrennungsluft übertragen wird, weiter zu erwärmen, **dadurch gekennzeichnet, dass** ein Fluidstrom-Steuersystem (30) in dem Kreislauf (14) angeordnet ist, um den auf Kühlwasser basierenden Lösungsstrom als Reaktion auf eine Temperatur der auf Kühlwasser basierenden Lösung, die aus dem Verbrennungsluftkühlsystem (28) strömt, zu steuern, so dass eine vorbestimmte Temperatur für die auf Kühlwasser basierende Lösung erreicht wird, die in dem Kreislauf (14) nach dem Verbrennungsluftkühlsystem (28) strömt, und dass der Durchgang (32) mit einer Pumpe (24) versehen ist, um die auf Kühlwasser basierende Lösung in dem Durchgang in einer Richtung von der Auslassseite (29) des Verbrennungsluftkühlsystems (28) zu der Einlassseite (27) des Verbrennungsluftkühlsystems (28) rückzuführen.

2. Kühlsystem für einen Kolbenverbrennungsmotor nach Anspruch 1, **dadurch gekennzeichnet, dass** das Verbrennungsluftkühlsystem (28) eine Primäreinheit (28.1), die in Reihe mit und nach dem Motorkühlsystem (26) angeordnet ist, und eine Sekundäreinheit (28.2) umfasst, die mit der Primäreinheit (28.1) durch den Durchgang (32) in Reihe geschaltet ist, und dass das Fluidstrom-Steuersystem (30) einen Umgehungsdurchgang (14.12) zum steuerbaren Umgehen der Verbrennungsluftkühlungs-Sekundäreinheit (28.2) umfasst.

3. Kühlsystem für einen Kolbenverbrennungsmotor nach einem der Ansprüche 1-2, **dadurch gekennzeichnet, dass** das Fluidstrom-Steuersystem (30) ein Ventilelement (36) umfasst, das angeordnet ist, um den auf Kühlwasser basierenden Lösungsstrom als Reaktion auf die Temperatur (18) der auf Kühlwasser basierenden Lösung, die aus dem Verbrennungsluftkühlsystem (28) strömt, zu dem Durchgang (32) zu leiten.

4. Kühlsystem für einen Kolbenverbrennungsmotor nach Anspruch 3, **dadurch gekennzeichnet, dass** das Ventilelement (36) ein Dreiwegeventilelement ist, das so angeordnet ist, dass es die auf Kühlwasser basierende Lösung so reguliert, dass sie in den Durchgang (32) strömt, und die auf Kühlwasser basierende Lösung so steuert, dass sie nach dem Verbrennungsluftkühlsystem (28) strömt.

5. Kühlsystem für einen Kolbenverbrennungsmotor nach einem der Ansprüche 1-4, **dadurch gekennzeichnet, dass** der Kreislauf (14) mit mindestens einem Temperatursensor (18) zum Messen einer Temperatur der auf Kühlwasser basierenden Lösung, die in dem Kreislauf (14) strömt, versehen ist.

6. Kühlsystem für einen Kolbenverbrennungsmotor nach Anspruch 5, **dadurch gekennzeichnet, dass** der Temperatursensor (18) in dem Kreislauf (14) nach dem Steuersystem (30) für den auf Kühlwasser basierenden Lösungsstrom angeordnet ist, um die Temperatur der auf Kühlwasser basierenden Lösung zu messen, die aus dem Verbrennungsluftkühlsystem (28) strömt.

7. Verfahren zum Betreiben eines Kühlsystems (10) eines Kolbenverbrennungsmotors, umfassend einen Kreislauf (14) für eine auf Kühlwasser basierende Lösung, eine Pumpe (24), die in dem Kreislauf (14) angeordnet ist, um die auf Kühlwasser basierende Lösung, die in dem Kreislauf (14) strömt, zu halten, ein Motorkühlsystem (26), das angeordnet ist, um den Motor oder Teile davon zu kühlen und die auf Kühlwasser basierende Lösung in dem Kreislauf (14) zu erwärmen, und ein Verbrennungsluftkühlsystem (28), das angeordnet ist, um Verbrennungsluft zu kühlen und die auf Kühlwasser basierende Lösung in dem Kreislauf (14) durch die Wärme zu erwärmen, die von der Verbrennungsluft übertragen wird, und einen Kühler (40), der an dem Kreislauf (14) angeordnet ist, wobei das Motorkühlsystem (26), das Verbrennungsluftkühlsystem (28) und der Kühler (40) in Reihe in dem Kreislauf (14) gekoppelt sind, wobei das Verfahren die Schritte umfasst zum Halten eines auf Kühlwasser basierenden Lösungsstroms durch eine Pumpe (24) in einem Kreislauf (14), Kühlen des Motors oder von Teilen davon und Erwärmen der auf Kühlwasser basierenden Lösung in dem Kreislauf (14) mit einem Motorkühlsystem (26) und Kühlen von Verbrennungsluft und Erwärmen der auf Kühlwasser basierenden Lösung in dem Kreislauf (14) durch ein Verbrennungsluftkühlsystem (28) und Messen einer Temperatur der auf Kühlwasser basierenden Lösung, die aus dem Verbrennungsluftkühlsystem (28) strömt, so dass ein Teil der auf Kühlwasser basierenden Lösung, die durch das Verbrennungsluftkühlsystem (28) strömt, so gesteuert wird, dass er zu einem Durchgang (32) eines Fluidstrom-Steuersystems (30) strömt, wobei der Durchgang (32) von dem Kreislauf (14) in einer Einlassseite des Verbrennungsluftkühlsystems (28) abzweigt, sich zwischen der Auslassseite (29) und der Einlassseite (27) des Verbrennungsluftkühlsystems (28) erstreckt und den Kühler (40) umgeht, und den Teil der auf Wasser basierenden Lösung so leitet, dass er zurück in das Verbrennungsluftkühlsystem (28) strömt und zumindest den Teil der auf Kühlwasser basierenden Lösung durch die Wärme, die von der Verbrennungsluft übertragen wird, weiter erwärmt, **gekennzeichnet durch** Betreiben eines Fluidstrom-Steuersystems (30), das in dem Kühlsystem (10) angeordnet ist, so dass die auf Kühlwasser basierende Lösung, die von dem Verbrennungsluftkühlsystem (28) strömt, **durch** ein Fluidstrom-Steuersystem (30) als Reaktion auf die gemessene Temperatur der auf Kühlwasser basierenden Lösung nach dem Verbrennungsluftkühlsystem (28) gesteuert wird, wodurch eine vorbestimmte Temperatur für die auf Wasser basierende Lösung erreicht wird, die in dem Kreislauf (14) nach dem Verbrennungsluftkühlsystem (28) strömt, und die auf Kühlwasser basierende Lösung in dem Durchgang (32) in einer Richtung von der Auslassseite (29) des Verbrennungsluftkühlsystems (28) zu der Einlassseite (27) des Verbrennungsluftkühlsystems (28) gepumpt (36) wird.

8. Verfahren zum Betreiben eines Kühlsystems (10) eines Kolbenverbrennungsmotors nach Anspruch 7, **gekennzeichnet durch** die Schritte:
1) wenn die gemessene Temperatur der auf Kühlwasser basierenden Lösung, die aus dem Verbrennungsluftkühlsystem (28) strömt, niedriger ist als eine vorgegebene Zieltemperatur, Leiten mittels des Fluidstrom-Steuersystems (30) eines Teils der auf Kühlwasser basierenden Lösung, so dass sie aus dem Kreislauf (14) über einen Durchgang (32) zurück in das Verbrennungsluftkühlsystem (28) strömt, und weiteres Erwärmen des geleiteten Teils der auf Kühlwasser basierenden Lösung **durch** die Wärme, die von der Verbrennungsluft übertragen wird, und Erreichen der vorgegebenen Zieltemperatur für die auf Kühlwasser basierende Lösung, die nach dem Verbrennungsluftkühlsystem (28) im Kreislauf (14) strömt, und
2) wenn eine Temperatur der auf Kühlwasser basierenden Lösung, die aus dem Verbrennungsluftkühlsystem (28) strömt, gleich oder höher als die vorbestimmte Zieltemperatur ist, Regulieren mittels des Fluidstrom-Steuersystems (30) eines Teils der auf Kühlwasser basierenden Lösung, so dass der Teil der auf Kühlwasser basierenden Lösung, der über den Durchgang (32) in das Verbrennungsluftkühlsystem (28) geleitet wird, geringer ist als in Schritt 1).

9. Verfahren nach einem der Ansprüche 7-8, **gekennzeichnet durch** Betreiben eines Fluidstrom-Steuersystems (30) derart, dass ein Teil des auf Kühlwasser basierenden Lösungsstroms aus dem Verbrennungsluftkühlsystem (28) durch ein Fluidstrom-Steuersystem (30) als Reaktion auf die gemessene Temperatur zu dem Verbrennungsluftkühlsystem zurückgeführt wird, weiteres Erwärmen zumindest des Teils der auf Kühlwasser basierenden Lösung **durch** die Wärme, die von der Verbrennungsluft übertragen wird, und Erreichen einer vorbestimmten Temperatur für die auf Kühlwasser basierende Lösung, die in dem Kreislauf (14) nach dem Verbrennungsluftkühlsystem (28) strömt.

10. Verfahren nach einem der Ansprüche 7-8, **gekennzeichnet durch** Betreiben eines Fluidstrom-Steuersystems (30) derart, dass ein Teil des auf Kühlwasser basierenden Lösungsstroms aus einer Primäreinheit (28.1) des Verbrennungsluftkühlsystems (28) **durch** ein Fluidstrom-Steuersystem (30) als Reaktion auf die gemessene Temperatur zu einer Sekundäreinheit (28.2) des Verbrennungsluftkühlsystems (28) zurückgeführt wird und ein verbleibender Teil des auf Kühlwasser basierenden Lösungsstroms von einer Primäreinheit (28.1) so geleitet wird, dass er die Sekundäreinheit (28.2) umgeht, so dass zumindest der Teils der auf Kühlwasser basierenden Lösung **durch** die Wärme, die von der Verbrennungsluft übertragen wird, weiter erwärmt wird und eine vorbestimmte Temperatur für die auf Kühlwasser basierende Lösung, die in dem Kreislauf (14) nach dem Verbrennungsluftkühlsystem (28) strömt, erreicht wird.

11. Verfahren nach einem der Ansprüche 7-10, **gekennzeichnet durch** Halten der auf Kühlwasser basierenden Lösung auf einer Temperatur von mindestens 95°C.

12. Kolbenverbrennungsmotor, umfassend ein Kühlsystem (10) nach einem der vorhergehenden Ansprüche 1-6.

## Revendications

1. Système de refroidissement (10) d'un moteur à piston à combustion interne (12) comprenant un circuit (14) pour une solution à base d'eau de refroidissement, une pompe (24) agencée dans le circuit (14) de manière à maintenir la solution à base d'eau de refroidissement s'écoulant dans le circuit (14), un système de refroidissement de moteur (26) conçu pour refroidir le moteur ou des parties de celui-ci et pour chauffer la solution à base d'eau de refroidissement dans le circuit (14), et un système de refroidissement d'air de combustion (28) conçu pour refroidir de l'air de combustion et pour chauffer la solution à base d'eau de refroidissement dans le circuit (14) par de la chaleur transférée à partir de l'air de combustion, et un refroidisseur (40) agencé sur le circuit (14), dans lequel le système de refroidissement de moteur (26), le système de refroidissement d'air de combustion (28) et le refroidisseur (40) sont accouplés en série dans le circuit (14) et le système de refroidissement de moteur (26) est agencé dans un côté entrée (27) du système de refroidissement d'air de combustion (28), et le système de commande d'écoulement (30) est doté d'un passage (32) conçu pour bifurquer à partir du circuit (14) dans un côté sortie (29) du système de refroidissement d'air de combustion (28) et s'étend entre le côté sortie (29) et le côté entrée (27) du système de refroidissement d'air de combustion (28) et contourne le refroidisseur (40), de telle façon qu'une partie de la solution à base d'eau de refroidissement écoulée à travers le système de refroidissement d'air de combustion (28) est destinée à s'écouler vers le passage (32) du système de commande d'écoulement de fluide (30), ledit passage (32) étant conçu pour amener la partie de la solution à base d'eau de refroidissement à retourner vers le système de refroidissement d'air de combustion (28) de manière à chauffer en outre au moins la partie de la solution à base d'eau de refroidissement par la chaleur transférée à partir de l'air de combustion, **caractérisé en ce qu'**un système de commande d'écoulement de fluide (30) est agencé sur le circuit (14) pour commander l'écoulement de solution à base d'eau de refroidissement en réponse à la température de la solution à base d'eau de refroidissement s'écoulant à partir du système de refroidissement d'air de combustion (28), de manière à atteindre une température prédéterminée pour la solution à base d'eau de refroidissement s'écoulant dans le circuit (14) en aval du système de refroidissement d'air de combustion (28), et **en ce que** le passage (32) est doté d'une pompe (24) pour faire recirculer la solution à base d'eau de refroidissement dans le passage dans une direction allant du côté sortie (29) du système de refroidissement d'air de combustion (28) au côté entrée (27) du système de refroidissement d'air de combustion (28).

2. Système de refroidissement pour un moteur à piston à combustion interne selon la revendication 1, **caractérisé en ce que** le système de refroidissement d'air de combustion (28) comprend une unité primaire (28.1) agencée en série et successivement avec le système de refroidissement de moteur (26) et une unité secondaire (28.2) reliée à l'unité primaire (28.1) par le passage (32) en série et **en ce que** le système de commande d'écoulement de fluide (30) comprend un passage de dérivation (14.12) permettant de contourner l'unité secondaire (28.2) du refroidissement d'air de combustion de façon commandée.

3. Système de refroidissement pour un moteur à piston à combustion interne selon l'une quelconque des revendications 1 à 2, **caractérisé en ce que** le système de commande d'écoulement de fluide (30) comprend un élément de soupape (36) conçu pour guider le flux de solution à base d'eau de refroidissement vers le passage (32) en réponse à la température (18) de la solution à base d'eau de refroidissement s'écoulant à partir du système de refroidissement d'air de combustion (28).

4. Système de refroidissement pour un moteur à piston à combustion interne selon la revendication 3, **caractérisé en ce que** l'élément de soupape (36) est un élément de soupape à trois voies conçu pour réguler la solution à base d'eau de refroidissement de manière à ce que celle-ci s'écoule dans le passage (32) et pour commander la solution à base d'eau de refroidissement de manière à ce que celle-ci s'écoule en aval du système de refroidissement d'air de combustion (28).

5. Système de refroidissement pour un moteur à piston à combustion interne selon l'une quelconque des revendications 1 à 4, **caractérisé en ce que** le circuit (14) est doté d'au moins un capteur de température (18) destiné à mesurer une température de la solution à base d'eau de refroidissement s'écoulant dans le circuit (14).

6. Système de refroidissement pour un moteur à piston à combustion interne selon la revendication 5, **caractérisé en ce que** le capteur de température (18) est agencé dans le circuit (14) en aval du système de commande d'écoulement (30) de solution à base d'eau de refroidissement, mesurant ainsi la température de la solution à base d'eau de refroidissement s'écoulant à partir du système de refroidissement d'air de combustion (28).

7. Procédé d'exploitation d'un système de refroidissement (10) d'un moteur à piston à combustion interne comprenant un circuit (14) pour une solution à base d'eau de refroidissement, une pompe (24) agencée dans le circuit (14) de manière à maintenir la solution à base d'eau de refroidissement s'écoulant dans le circuit (14), un système de refroidissement de moteur (26) conçu pour refroidir le moteur ou des parties de celui-ci et pour chauffer la solution à base d'eau de refroidissement dans le circuit (14), et un système de refroidissement d'air de combustion (28) conçu pour refroidir de l'air de combustion et pour chauffer la solution à base d'eau de refroidissement dans le circuit (14) par la chaleur transférée à partir de l'air de combustion, et un refroidisseur (40) agencé dans le circuit (14), dans lequel le système de refroidissement de moteur (26), le système de refroidissement d'air de combustion (28) et le refroidisseur (40) sont accouplés en série dans le circuit (14), le procédé comprenant les étapes de maintien d'un flux de solution à base d'eau de refroidissement par une pompe (24) dans un circuit (14), de refroidissement du moteur ou de parties de celui-ci et de chauffage de la solution à base d'eau de refroidissement dans le circuit (14) avec un système de refroidissement de moteur (26), et de refroidissement d'air de combustion et de chauffage de la solution à base d'eau de refroidissement dans le circuit (14) par un système de refroidissement d'air de combustion (28), et de mesure de la température de la solution à base d'eau de refroidissement s'écoulant à partir du système de refroidissement d'air de combustion (28), de telle façon qu'une partie de la solution à base d'eau de refroidissement écoulée à travers le système de refroidissement d'air de combustion (28) est commandée de manière à s'écouler vers un passage (32) du système de commande d'écoulement de fluide (30), ledit passage (32) bifurquant à partir du circuit (14) dans un côté entrée du système de refroidissement d'air de combustion (28) s'étendant entre le côté sortie (29) et le côté entrée (27) du système de refroidissement d'air de combustion (28) et contournant le refroidisseur (40), et amenant la partie de la solution à base d'eau de refroidissement à retourner dans le système de refroidissement d'air de combustion (28), et de chauffage supplémentaire au moins de la partie de la solution à base d'eau de refroidissement par la chaleur transférée à partir de l'air de combustion, **caractérisé par** l'exploitation d'un système de commande d'écoulement de fluide (30) agencé dans le système de refroidissement (10) de manière à commander une solution à base d'eau de refroidissement s'écoulant à partir du système de refroidissement d'air de combustion (28) à l'aide d'un système de commande d'écoulement de fluide (30) en réponse à la température mesurée de la solution à base d'eau de refroidissement en aval du système de refroidissement d'air de combustion (28), de manière à atteindre une température prédéterminée pour la solution à base d'eau de refroidissement s'écoulant dans le circuit (14) en aval du système de refroidissement d'air de combustion (28), et la solution à base d'eau de refroidissement dans le passage (32) est pompée (36) dans une direction allant du côté sortie (29) du système de refroidissement d'air de combustion (28) vers le côté entrée (27) du système de refroidissement d'air de combustion (28).

8. Procédé d'exploitation d'un système de refroidissement (10) d'un moteur à piston à combustion interne selon la revendication 7, **caractérisé par** les étapes suivantes :
1) lorsque la température mesurée de la solution à base d'eau de refroidissement s'écoulant à partir du système de refroidissement d'air de combustion (28) est inférieure à une température cible prédéterminée, le système de commande d'écoulement de fluide (30) guide une partie de la solution à base d'eau de refroidissement de manière à ce que celle-ci s'écoule à partir du circuit (14) via un passage (32) et de nouveau vers le système de refroidissement d'air de combustion (28), et la partie guidée de la solution à base d'eau de refroidissement est chauffée davantage par la chaleur transférée à partir de l'air de combustion et la température cible prédéterminée est atteinte pour la solution à base d'eau de refroidissement s'écoulant en aval du système de refroidissement d'air de combustion (28) dans le circuit (14), et
2) lorsqu'une température de la solution à base d'eau de refroidissement s'écoulant à partir du système de refroidissement d'air de combustion (28) est égale ou supérieure à la température cible prédéterminée, le système de commande d'écoulement de fluide (30) régule une partie de la solution à base d'eau de refroidissement pour que celle-ci s'écoule de façon à ce que la partie de la solution à base d'eau de refroidissement guidée via le passage (32) vers le système de refroidissement d'air de combustion (28) soit moins importante que dans l'étape 1).

9. Procédé selon l'une quelconque des revendications 7 à 8, **caractérisé par** l'exploitation d'un système de commande d'écoulement de fluide (30) de telle façon qu'une partie du flux de solution à base d'eau de refroidissement venant du système de refroidissement d'air de combustion (28) est renvoyée vers le système de refroidissement d'air de combustion par un système de commande d'écoulement de fluide (30) en réponse à la température mesurée, au moins une partie de la solution à base d'eau de refroidissement est chauffée davantage par la chaleur transférée à partir de l'air de combustion et une température prédéterminée est atteinte pour la solution à base d'eau de refroidissement s'écoulant dans le circuit (14) en aval du système de refroidissement d'air de combustion (28).

10. Procédé selon l'une quelconque des revendications 7 à 8, **caractérisé par** l'exploitation d'un système de commande d'écoulement de fluide (30) de telle façon qu'une partie du flux de solution à base d'eau de refroidissement venant d'une unité primaire (28.1) du système de refroidissement d'air de combustion (28) est guidée vers une unité secondaire (28.2) du système de refroidissement d'air de combustion (28) par un système de commande d'écoulement de fluide (30) et une partie restante du flux de solution à base d'eau de refroidissement venant d'une unité primaire (28.1) est guidée de manière à contourner l'unité secondaire (28.2) en réponse à la température mesurée, de manière à chauffer davantage au moins une partie de la solution à base d'eau de refroidissement par le chaleur transférée à partir de l'air de combustion et à atteindre une température prédéterminée pour la solution à base d'eau de refroidissement s'écoulant dans le circuit (14) en aval du système de refroidissement d'air de combustion (28).

11. Procédé selon l'une quelconque des revendications 7 à 10, **caractérisé par** le maintien de la solution à base d'eau de refroidissement à une température d'au moins 95 °C.

12. Moteur à piston à combustion interne comprenant un système de refroidissement (10) selon l'une quelconque des revendications 1 à 6.
